# EUROPÄISCHE PATENTSCHRIFT

(11) **EP 3 191 758 B1**
(45) Veröffentlichungstag und Bekanntmachung des Hinweises auf die Patenterteilung: **09.10.2019**
(21) Anmeldenummer: 15777615.4
(22) Anmeldetag: 14.09.2015
(51) Int. Cl.: F16L 37/084

(54) **VERRIEGELUNGSELEMENT FÜR EINEN KONNEKTOR**
LOCKING ELEMENT FOR A CONNECTOR
ÉLÉMENT DE VERROUILLAGE POUR CONNECTEUR

(30) Priorität: 12.09.2014 DE 102014113151
(43) Veröffentlichungstag der Anmeldung: 19.07.2017
(73) Patentinhaber: Eugen Forschner GmbH, 78549 Spaichingen (DE)
(72) Erfinder: ACKERMANN, Janosch, 78549 Spaichingen (DE); GRÜNEFELD, Sebastian, 78549 Spaichingen (DE); LINZ, Mario, 70435 Stuttgart (DE)
(74) Vertreter: Wiese, Gerhard
(86) Internationale Anmeldenummer: PCT/EP2015/070990
(87) Internationale Veröffentlichungsnummer: WO 2016/038226

(56) Entgegenhaltungen:
- US-A- 4 541 457
- US-A1- 2013 300 108

## Beschreibung

Die Erfindung betrifft ein Verriegelungssystem mit einem Konnektor, wie er zum Verbinden von Steckern und Schlauchkupplungen verwendet wird, gemäß dem Oberbegriff des Patentanspruchs 1.

Ein Verriegelungselement ist beispielsweise aus der DE 10 2004 054 467 A1 bekannt. Das gabelförmige Verriegelungselement wird nach Einführen des Steckers in den Konnektor senkrecht zur Achse des Steckers in den Konnektor eingeschoben, verrastet dabei federnd hinter einer Wulst des Steckers und hält diesen dadurch formschlüssig im Konnektor fest. Das bekannte Verriegelungselement muss manuell in seine Kupplungsposition bewegt werden, wobei gleichzeitig der Stecker gegen seinen Anschlag im Konnektor gedrückt werden muss.

Aus der US 4 541 457 A ist ein gattungsgemäßes Verriegelungssystem bekannt. Bei diesem Verriegelungssystem kann beim Koppeln des Steckers mit dem Konnektor ein mittels einer ersten Feder beaufschlagtes Verriegelungselement erst dann in seine Verriegelungsstellung bewegt werden, wenn der Stecker einen von einer zweiten Feder beaufschlagten Verriegelungsbolzen außer Eingriff mit dem Verriegelungselement gebracht hat.

Aufgabe der Erfindung ist es, ein Verriegelungssystem mit einem einfacheren Aufbau, einer erleichterten Handhabung und einer erhöhten Verriegelungssicherheit bereit zu stellen.

Diese Aufgabe wird durch ein Verriegelungssystem mit den Merkmalen des Anspruchs 1 gelöst. Vorteilhafte Ausgestaltungen der Erfindung sind in den Unteransprüchen angegeben.

Das im erfindungsgemäßen Verriegelungssystem verwendete Verriegelungselement weist zumindest ein Federelement auf, mittels dem das Verriegelungselement selbsttätig in eine Verriegelungsposition mit dem Stecker gebracht und in seiner Verriegelungsposition gehalten wird. Das Federelement bewirkt bei der Erfindung somit eine selbsttätige Bewegung des Verriegelungselements in seine Verriegelungsposition beim Einführen des Steckers. Das Federelement ist als integraler Bestandteil des Verriegelungselements ausgebildet, beispielsweise als Federzungen aus Federstahl.

Gemäß der Erfindung ist vorgesehen, dass das Verriegelungselement einen senkrecht zu einer Achse des Konnektors bewegbaren Schenkel aufweist, in dem eine Bohrung zur Durchführung des Steckers ausgebildet ist. Dadurch, dass der Stecker von einer geschlossenen Bohrung des Verriegelungselements umgeben wird, wird eine zuverlässige Fixierung des Steckers im Konnektor gewährleistet. Bekannte Verriegelungselemente werden demgegenüber in der Regel von einer unten offenen Klammer aus Kunststoff gebildet, die eine geringere Sicherheit gegenüber Bruch und einem unbeabsichtigten Lösen aufweist.

Gemäß der Erfindung ist vorgesehen, dass am Schenkel wenigstens ein erstes Rastelement ausgebildet ist, das zumindest phasenweise mit einem zweiten Rastelement am Konnektor im Eingriff steht. Erstes und zweites Rastelement sorgen im Zusammenwirken für eine exakte Positionierung des Verriegelungselements beim Einführen des Steckers oder bei dessen Entkopplung.

Die Erfindung sieht weiterhin vor, dass das Verriegelungselement zumindest einen federelastischen Vorsprung aufweist, mittels dem es in eine definierte axiale Position bezüglich des Konnektors gedrückt wird. Durch den federelastischen Vorsprung wird das für die Bewegung des Verriegelungselements notwendige axiale Spiel eliminiert. Im Zusammenwirken mit entsprechend ausgestalteten Führungen am Durchbruch im Konnektor bewirkt der Vorsprung gleichzeitig eine Zentrierung des Verriegelungselements im Konnektor. Auch dieser wenigstens eine federelastische Vorsprung ist materialeinheitlich aus dem Material des Verriegelungselements gebildet.

Das erfindungsgemäße Verriegelungselement wird aus einem Blech oder einem Federstahl gebildet und weist somit eine hohe Temperaturbeständigkeit auf.

Dadurch, dass das Federelement aus Metall gebildet ist, wird eine dauerhafte Fixierung des Steckers im Konnektor auch bei einer hohen Temperaturbeanspruchung oder einer Beanspruchung durch starkes Rütteln gewährleistet.

Das erfindungsgemäße Verriegelungselement weist weiterhin zumindest ein weiteres Federelement auf, mittels dem der Stecker in axialer Richtung entgegen der Einführrichtung des Steckers gegenüber dem Konnektor federnd vorgespannt ist. Hierdurch wird das bevorzugt aus Kunststoff bestehende Gehäuse des Konnektors wirksam vor dem Bersten bei einem durch Unterschreitung des Gefrierpunkts des Mediums und entsprechender Ausdehnung entstehenden Eisdruck geschützt, da sich der Stecker in diesem Fall gegen den Druck des weiteren Federelements im Konnektor etwas verlagern kann.

Ein Verriegelungssystem, dessen Bestandteil das vorstehend beschriebene Verriegelungselement bildet, sieht weiterhin vor, dass der Stecker am Außenumfang wenigstens einen Bund aufweist, mittels dem ein Betätigungselement für das zweite Rastelement am Verriegelungselement betätigbar ist. Das Rastelement am Verriegelungselement kann als Rasthaken oder als Rastaussparung ausgebildet sein. Das Rastelement am Konnektor wird bevorzugt von einem dazu komplementären Rastvorsprung gebildet.

Das Verriegelungssystem sieht weiterhin vorteilhaft vor, dass an einem vertikalen Durchbruch des Konnektors bzw. am Rastvorsprung wenigstens eine Schrägfläche ausgebildet ist, mittels der der Rasthaken beim Lösen der Fixierung in Eingriff mit einem Rastvorsprung am Konnektor geführt wird.

Nachfolgend werden Ausführungsbeispiele des erfindungsgemäßen Verriegelungselements und Verriegelungssystems unter Bezugnahme auf die Zeichnungen näher erläutert. Es zeigt:
- Fig. 1: das Verriegelungssystem mit dem Verriegelungselement in der Bereitschaftsposition vor dem Einführen des Steckers in den Konnektor;
- Fig. 2: das Verriegelungssystem mit teilweise eingeschobenem Stecker;
- Fig. 3: das Verriegelungssystem bei der Entriegelung des Rasthakens;
- Fig. 4: das Verriegelungssystem in der verriegelten Position;
- Fig. 5: eine vergrößerte Detaildarstellung des Verriegelungselements; und
- Fig. 6: eine alternative Ausführungsform der Rastelemente;
- Fig. 7: eine schematische Darstellung eines zusätzlichen Federelements zur Kompensation eines auf den Stecker einwirkenden Eisdrucks; und
- Fig. 8: eine alternative Ausgestaltung zur Fig. 7.

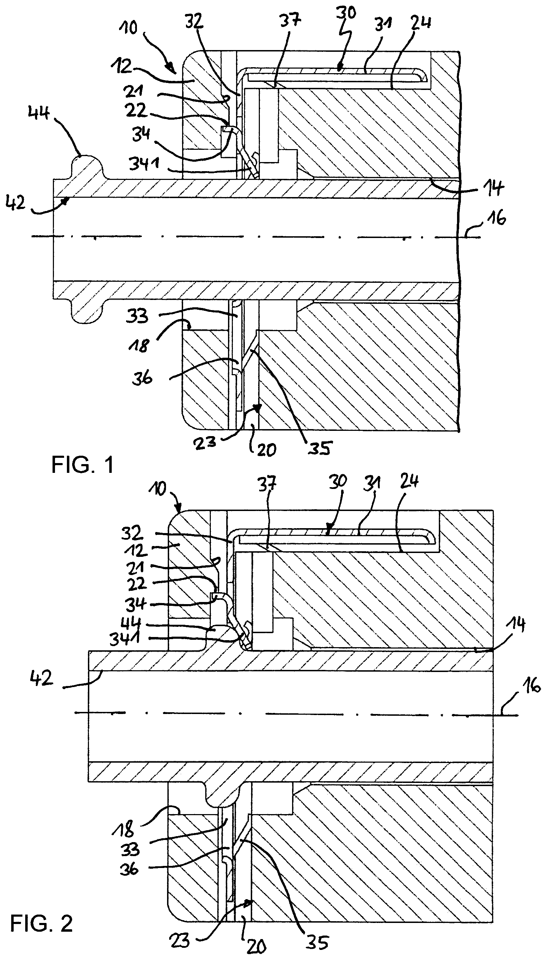

Ein in den Fig. 1 bis 5 dargestelltes erstes Ausführungsbeispiel der Erfindung zeigt einen Konnektor 10 mit einem Gehäuse 12, das von einer horizontalen Bohrung 14 durchdrungen wird. Die Bohrung 14 ist im linken Teil des Gehäuses 12 durch eine im Durchmesser größere Aufnahme 18 erweitert. Die Längsachse 16 der Bohrung 14 bildet gleichzeitig die Längsachse eines in der Bohrung 14 aufgenommenen Steckers 40.

Der Stecker 40 ist mit einer längs verlaufenden Bohrung 42 versehen und dient im Zusammenwirken mit der Bohrung 14 des Konnektors 10 und einer nicht dargestellten, in der Zeichnung auf der rechten Seite mit dem Konnektor 10 verbundenen Fluidleitung zur Führung eines Fluids. Der Stecker 40 entspricht in seiner Form einem genormten SAE-Stecker, wie er zur Verbindung einer ein Harnstoff-Gemisch führenden Leitung bei gemäß den neuen EU-Schadstoffvorschriften ausgebildeten Dieselmotoren verwendet wird.

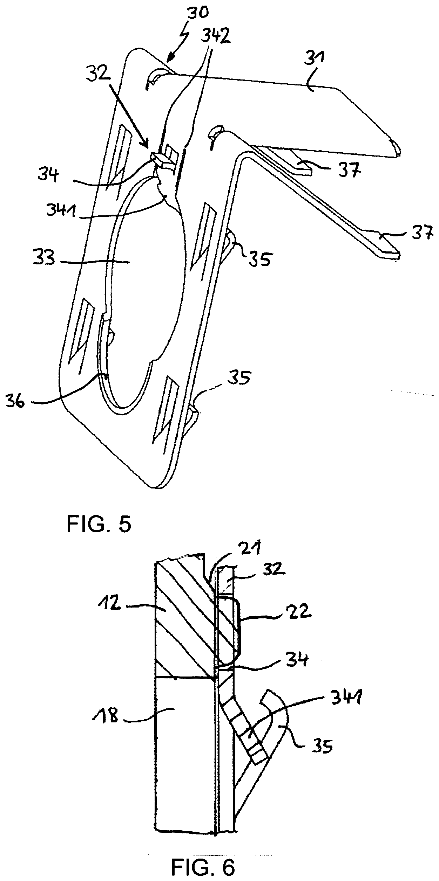

Das Gehäuse 12 weist ferner einen sich senkrecht zur Bohrung 14 erstreckenden Durchbruch 20 auf, der zur Aufnahme und Führung eines Verriegelungselements 30 dient. An der linken Wand des Durchbruchs 20 ist eine nach innen vorspringende Schrägfläche 21 vorgesehen, an die sich nach unten ein nach außen vorspringender Rastvorsprung 22 anschließt. Schrägfläche 21 und Rastvorsprung 22 wirken mit einem Rasthaken 34 am Verriegelungselement 30 zusammen. In einer übergeordneten Bezeichnung, die auch auf die Bauteile gemäß der in Fig. 6 gezeigten Alternative zutrifft, wird der Rastvorsprung 22 als zweites Rastelement 22 und der Rasthaken 34 als erstes Rastelement 34 bezeichnet.

Nahe der Oberseite des Gehäuses 12 ist an diesem eine Aussparung 24 vorgesehen, die zur Aufnahme eines horizontalen Schenkels 31 des Verriegelungselements 30 und zweier am horizontalen Schenkel 31 ausgebildeter oder dort angeordneter Federelemente 37 dient.

An einem vertikalen Schenkel 32 des Verriegelungselements 30 ist ein kreisförmiger Durchbruch 33 ausgebildet, dessen Durchmesser etwas größer ist als ein am Außenumfang des Steckers 40 vorgesehener Bund 44. Im unteren Teil schließt sich an den Durchbruch 33 eine im Durchmesser kleinere halbkreisförmige Erweiterung 36 an. Der Durchbruch 33 und die Erweiterung 36 bilden gemeinsam eine schlüssellochartige Öffnung.

Am vertikalen Schenkel 32 des Verriegelungselements 30 ist ferner am oberen Rand des Durchbruchs 33 ein Rasthaken 34 als erstes Rastelement 34 ausgebildet. Zu beiden Seiten des Rasthakens 34 sind vom Durchbruch 33 ausgehende Einschnitte 342 im vertikalen Schenkel 32 vorgesehen. Die Einschnitte 342 gehen in ihrer Verlängerung nach unten zum Durchbruch 33 hin in einen Hebelarm 341 über. Der Hebelarm 341 steht mit dem Rasthaken 34 materialeinheitlich in Verbindung, so dass bei einer Bewegung des Hebelarms 341 der als erstes Rastelement 34 dienende Rasthaken 34 zwangsläufig mit bewegt wird.

Am vertikalen Schenkel 32 des Verriegelungselements 30 sind ferner zu beiden Seiten der Aussparung 33 bzw. der Erweiterung 36 insgesamt vier Vorsprünge 35 ausgebildet, die bevorzugt durch Ausklinken und Biegen materialeinheitlich aus dem vertikalen Schenkel 32 gebildet sind. Die Vorsprünge 35 bewirken mit ihren sich federnd gegen die rechte Wand des Durchbruchs 20 abstützenden Zungen zum einen das Andrücken des Verriegelungselements 30 an die linke Wand des Durchbruchs 20, wodurch das axiale Spiel des Verriegelungselements 30 im Durchbruch 20 weitestgehend eliminiert wird.

Die Vorsprünge 35 bewirken zum anderen im Zusammenwirken mit an der rechten Wand des Durchbruchs 20 ausgebildeten Führungen 23 eine Zentrierung des Verriegelungselements 30 im Durchbruch 20.

Der Konnektor 10 und der Stecker 40 sind bevorzugt aus einem gegen Harnstoff und gegen stark unterschiedliche Temperaturen unempfindlichen Kunststoff hergestellt. Das Verriegelungselement 30 besteht besonders bevorzugt aus einem Federstahl.

Nachfolgend wird anhand der Figuren 1 bis 4 ein Verriegelungsvorgang des Steckers 40 im Konnektor 10 beschrieben. In Figur 1 ist das Verriegelungselement 30 in den Durchbruch 20 des Gehäuses 12 eingeschoben. Dabei liegt der als erstes Rastelement 34 dienende Rasthaken 34 am als zweites Rastelement 22 dienenden Rastvorsprung 22 an. In dieser Aufnahme- oder Kupplungsposition steht der Durchbruch 33 fluchtend zur Aufnahme 18, so dass der Stecker 40 mühelos in die Bohrung 14 eingeführt werden kann. Die fluchtende Anordnung des Durchbruchs 33 mit der Aufnahme 18 ist bei der vorliegenden Erfindung systembedingt unabhängig von einem manuellen Bedienungsvorgang stets genau definiert gewährleistet und trägt zu einer erhöhten Sicherheit und einer leichteren Handhabbarkeit beim Kuppeln und Entkuppeln eines Steckers 40 bei.

In Figur 2 gerät beim weiteren Einschieben des Steckers 40 in die Bohrung 14 die rechte Seite des Bunds 44 in Anlage an den Hebelarm 341.

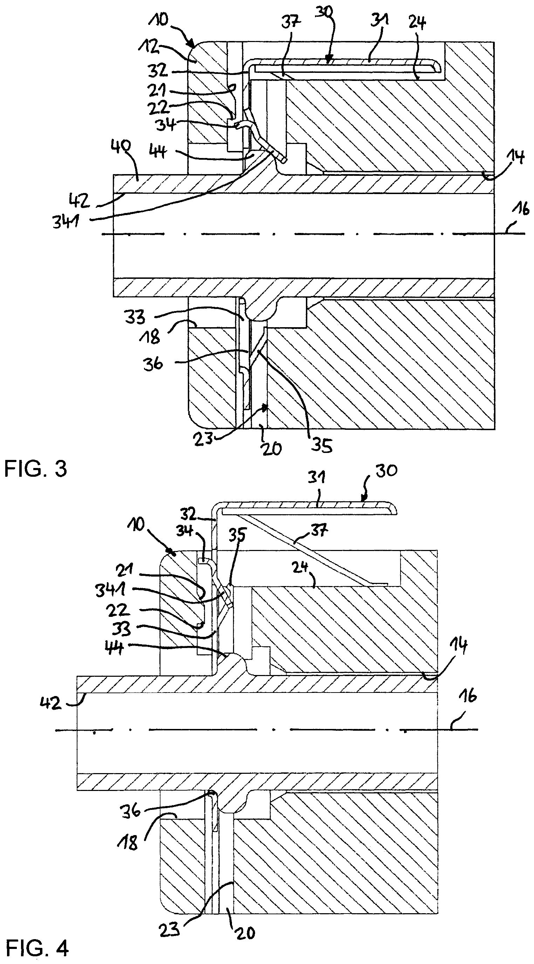

In Figur 3 drückt der Bund 44 den Hebelarm 341 nach rechts. Dabei wird gleichzeitig der Rasthaken 34 außer Eingriff mit dem Rastvorsprung 22 gebracht. Durch die federnde Vorbelastung des Verriegelungselements 30 mittels der Federelemente 37 nach oben wird das Verriegelungselement 30, nachdem der Bund 40 den Hebelarm 341 zur Seite gedrückt hat und der Rasthaken 34 außer Eingriff mit dem Rastvorsprung 22 geraten ist, automatisch nach oben in die Verriegelungsposition gedrückt. Diese Verriegelungsposition ist in Figur 4 dargestellt. In dieser Position legt sich die Erweiterung 36 von unten an die Außenseite des Bunds 44 an und hält somit den Stecker 40 gegenüber dem Konnektor 10 in einer definierten axialen Verriegelungsposition. Die Federelemente 37 werden dabei durch die Aussparung 24 am Gehäuse 12 geführt.

Zum Entriegeln wird das Verriegelungselement 30 mit seinem horizontalen Schenkel 31 aus der in Figur 4 dargestellten Verriegelungsposition gegen die Federkraft der Federelemente 37 nach unten gedrückt. Dabei gleitet der Rasthaken 34 über die Schrägfläche 21 nach unten und gerät erneut mit dem Rastvorsprung 22 in Eingriff. Da gleichzeitig die Erweiterung 36 nach unten verschoben wird und der Durchbruch 33 in eine fluchtende Anordnung zur Aufnahme 18 gerät, kann der Stecker 40 wieder nach links aus der Bohrung 14 herausgezogen werden.

In Fig. 6 ist eine alternative Ausgestaltung des ersten und zweiten Rastelements als zweite Ausführungsform gezeigt. Dabei wird das erste Rastelement 34 am Verriegelungselement 30 von einer Rastaussparung 34 gebildet. Die Rastaussparung 34 umgreift in einer Bereitschaftsposition für ein Ein- und Ausführen eines Steckers 40 entsprechend der in Fig. 1 gezeigten Position den Rastvorsprung 22 an der linken Wand des Gehäuses 12 des Konnektors 10. Zum Lösen der Arretierung bzw. zur Vorbereitung einer Entkopplung des Steckers 40 wird der vertikale Schenkel 32 des Verriegelungselements 30 bei der Bewegung desselben nach unten durch die Schrägfläche 21 gegen den Druck der Vorsprünge 35 wieder in Eingriff mit dem Rastvorsprung 22 geführt.

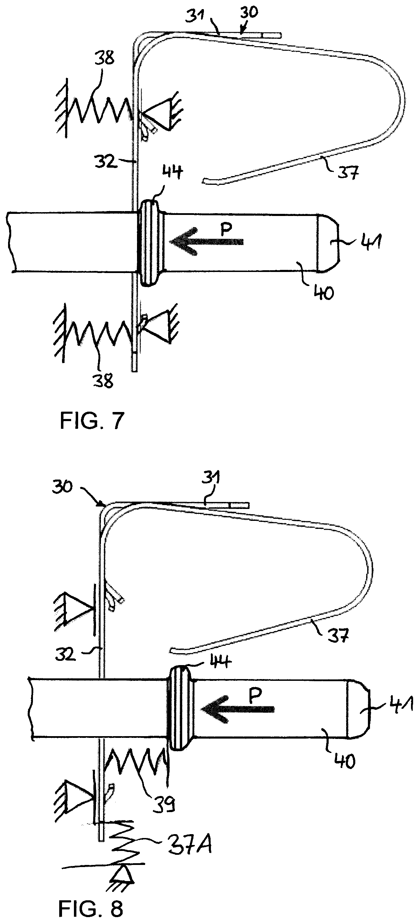

Gemäß einer weiteren in Fig. 8 angedeuteten Variante können die Federelemente 37 beispielsweise auch durch eine Spiralfeder 37A ersetzt werden, die im unteren Teil des Gehäuses 12 gelagert ist und die von unten gegen die Unterkante des vertikalen Schenkels 32 des Verriegelungselements 30 drückt. In diesem Falle kann auf den horizontalen Schenkel 31 des Verriegelungselements 30 gänzlich verzichtet werden und der Bediener drückt zum Entriegeln des Verriegelungselements 30 einfach auf die Oberkante des vertikalen Schenkels 32, die zum Schutz gegen ein unbeabsichtigtes Lösen der Verriegelung auch in der verriegelten Stellung in einer Aussparung 24 des Gehäuses 12 positioniert sein kann.

Das Verriegelungselement 30 bleibt durch den Eingriff des Rasthakens 34 am Rastvorsprung 22 unverlierbar mit dem Konnektor 10 verbunden und steht in Bereitschaft für einen erneuten Kupplungsvorgang eines Steckers 40. Der Kupplungsvorgang wird durch das erfindungsgemäße Verriegelungssystem vereinfacht, da beim Einschieben des Steckers 40 das Verriegelungselement 30 nicht manuell bewegt werden muss, sondern durch wenigstens eine vorgespannte Feder 37 bzw. 37A selbsttätig in die Verriegelungsstellung gebracht wird.

Wie in den Fig. 7 und Fig. 8 dargestellt, wirkt auf das Verriegelungselement 30 vorteilhaft wenigstens ein weiteres Federelement 38 bzw. 39 ein, das den Stecker 40 in axialer Richtung gegen seinen Sitz am Konnektor 10 drückt. Dadurch wird eine Kompensation eines auf die Stirnseite 41 des Steckers 40 einwirkenden Eisdrucks P erreicht, der bei einem Gefrieren des in der Bohrung 42 und in einer am Konnektor 10 befestigten, mit der Bohrung 14 dicht verbundenen, nicht dargestellten Fluidleitung geführten flüssigen Mediums entsteht, das sich beim Erreichen seines Gefrierpunkts ausdehnt.

Dabei ist das als Druckfeder ausgebildete wenigstens eine Federelement 38 gemäß Fig. 7 links vom vertikalen Schenkel 32 so angeordnet, dass es über den vertikalen Schenkel 32 des Verriegelungselements 30 den Bund 44 des Steckers 40 in der Figur 7 nach rechts drückt. Die Federkraft ist dabei höher ausgelegt als die für das Einführen des Steckers 40 erforderliche Steckkraft. Sie schützt das aus Kunststoff bestehende Gehäuse 12 des Konnektors 10 jedoch wirksam vor dem Bersten bei einem durch Unterschreitung des Gefrierpunkts des Mediums entstehenden Eisdruck P.

In der in Fig. 8 dargestellten Variante ist das wenigstens eine Federelement 38 durch wenigstens ein Federelement 39 ersetzt, das zwischen dem vertikalen Schenkel 32 des Verriegelungselements 30 und dem Bund 44 des Steckers 40 angeordnet ist und eine Druckkraft erzeugt.

Das wenigstens eine weitere Federelement 38 bzw. 39 kann besonders vorteilhaft unmittelbar am Verriegelungselement 30, beispielsweise in Form einer am Rand des Durchbruchs 33 ausgebildeten Auftulpung ausgebildet sein oder als separates Bauteil mit diesem verbunden sein oder im Eingriff stehen.

**Bezugszeichenliste**

| | | | |
|---|---|---|---|
| 10 | Konnektor | 35 | Vorsprung |
| 12 | Gehäuse | 36 | Erweiterung (von 33) |
| 14 | Bohrung | 37 | Federelement |
| 16 | Längsachse | 37A | Federelement |
| 18 | Aufnahme | 38 | Federelement |
| 20 | Durchbruch | 39 | Federelement |
| 21 | Schrägfläche | 40 | Stecker |
| 22 | (zweites) Rastelement | 41 | Stirnseite (von 40) |
| 23 | Führung | 42 | Bohrung |
| 24 | Aussparung | 44 | Bund |
| 30 | Verriegelungselement | P | Eisdruck |
| 31 | (horizontaler) Schenkel | | |
| 32 | (vertikaler) Schenkel | | |
| 33 | Durchbruch | | |
| 34 | (erstes) Rastelement | | |
| 341 | Betätigungselement | | |
| 342 | Einschnitt | | |

## Patentansprüche

1. Verriegelungssystem mit einem Konnektor (10), einem in diesen einführbaren Fluid führenden Stecker (40) und einem Verriegelungselement (30) zur lösbaren Fixierung des Fluid führenden Steckers (40) am Konnektor (10), wobei das Verriegelungselement (30) ein erstes Rastelement (34) und ein Betätigungselement (341) aufweist, wobei der Stecker (40) am Außenumfang wenigstens einen Bund (44) aufweist, mittels dem das Betätigungselement (341) für das erste Rastelement (34) am Verriegelungselement (30) betätigbar ist, mittels dem das Verriegelungselement (30) in einer definierten Kupplungsposition für ein Einführen des Steckers (40) gehalten wird, **dadurch gekennzeichnet, dass** das Verriegelungselement (30) aus einem Blech oder aus einem Federstahl besteht, zumindest ein materialeinheitlich mit diesem gebildetes Federelement (37) aufweist, mittels dem das Verriegelungselement (30) beim Einführen des Steckers (40) in den Konnektor (10) selbsttätig in eine Verriegelungsposition mit dem Stecker (40) gebracht und in seiner Verriegelungsposition gehalten wird, dass das Betätigungselement (341) und das erste Rastelement (34) materialeinheitlich mit dem Verriegelungselement (30) gebildet sind und dass das Verriegelungselement (30) zumindest einen materialeinheitlich mit diesem gebildeten, federelastischen Vorsprung (35) aufweist, mittels dem das Verriegelungselement (30) in eine definierte axiale Position bezüglich des Konnektors (10) gedrückt wird.

2. Verriegelungssystem nach Anspruch 1, **dadurch gekennzeichnet, dass** das Verriegelungselement (30) einen senkrecht zu einer Achse (16) des Konnektors (10) bewegbaren Schenkel (32) aufweist, in dem eine Bohrung (33) zur Durchführung des Steckers (40) ausgebildet ist.

3. Verriegelungssystem nach Anspruch 1 oder 2, **dadurch gekennzeichnet, dass** das am Verriegelungselement (30) ausgebildete erste Rastelement (34) zumindest phasenweise mit einem zweiten Rastelement (22) am Konnektor (10) im Eingriff steht.

4. Verriegelungssystem nach einem der vorhergehenden Ansprüche, **dadurch gekennzeichnet, dass** der wenigstens eine Vorsprung (35) eine Zentrierung des Verriegelungselements (30) im Konnektor (10) bewirkt.

5. Verriegelungssystem nach einem der vorhergehenden Ansprüche, **dadurch gekennzeichnet, dass** das Verriegelungselement (30) in einem vertikalen Durchbruch (20) des Konnektors (10) aufgenommen und geführt ist.

6. Verriegelungssystem nach einem der vorhergehenden Ansprüche, **dadurch gekennzeichnet, dass** das Verriegelungselement (30) zumindest ein Federelement (38, 39) aufweist, mittels dem der Stecker (40) in axialer Richtung entgegen der Einführrichtung des Steckers (40) gegenüber dem Konnektor (10) federnd vorgespannt ist.

7. Verriegelungssystem nach einem der vorhergehenden Ansprüche 3 bis 6, **dadurch gekennzeichnet, dass** an einem vertikalen Durchbruch (20) des Konnektors (10) wenigstens eine Schrägfläche (21) ausgebildet ist, mittels der das erste Rastelement (34) beim Lösen der Verriegelung in Eingriff mit dem zweiten Rastelement (22) am Konnektor (10) geführt wird.

## Claims

1. A locking system with a connector (10), a fluid-conducting plug (40) that can be inserted into same, and a locking element (30) for releasably fixing the fluid-conducting plug (40) to the connector (10),
wherein the locking element (30) has a first latching member (34) and an actuating element (341),
wherein the plug (40) has at least one collar (44) on its outer periphery by means of which the actuating element (341) for the first latching member (34) on the locking element (30) can be operated by means of which the locking element (30) is held in a defined coupling position for the insertion of the plug (40), **characterized in that** the locking element (30) is made of a sheet metal or of a spring steel and has at least one spring element (37) formed in a materially integral manner therewith by means of which the locking element (30) is automatically brought into a locking position with the plug (40) upon insertion of the plug (40) into the connector (10) and held in its locking position,
that the actuating element (341) and the first latching member (34) are formed in a materially integral manner with the locking element (30),
and that the locking element (30) has at least one resilient projection (35) formed in a materially integral manner therewith by means of which the locking element (30) is pressed into a defined axial position relative to the connector (10).

2. The locking system as set forth in claim 1, **characterized in that** the locking element (30) has a leg (32) that can be moved perpendicular to an axis (16) of the connector (10) and in which a bore (33) for the passage of the plug (40) is formed.

3. The locking system as set forth in claim 1 or 2, **characterized in that** the first latching member (34) formed on the locking element (30) engages at least in phases with a second latching member (22) on the connector (10).

4. The locking system as set forth in any one of the preceding claims, **characterized in that** the at least one projection (35) brings about a centering of the locking element (30) in the connector (10).

5. The locking system as set forth in any one of the preceding claims, **characterized in that** the locking element (30) is received and guided in a vertical opening (20) of the connector (10).

6. The locking system as set forth in any one of the preceding claims, **characterized in that** the locking element (30) has at least one spring element (38, 39) by means of which the plug (40) is resiliently biased in the axial direction against the direction of insertion of the plug (40) relative to the connector (10).

7. The locking system as set forth in any one of preceding claims 3 to 6, **characterized in that** at least one inclined surface (21) is formed on a vertical opening (20) of the connector (10) by means of which the first latching member (34) is guided on the connector (10) upon release of the lock in engagement with the second latching member (22).

## Revendications

1. Système de verrouillage comportant un raccord (10), un connecteur (40) conduisant du fluide pouvant être introduit dans ledit connecteur et un élément de verrouillage (30) destiné à fixer de manière amovible le connecteur (40) au raccord (10), l'élément de verrouillage (30) comportant un premier élément d'encliquetage (34) et un élément d'actionnement (341), le connecteur (40) au niveau de sa circonférence extérieure présentant au moins un collet (44), au moyen duquel l'élément d'actionnement (341) du premier élément d'encliquetage (34) peut être actionné sur l'élément de verrouillage (30), au moyen duquel l'élément de verrouillage (30) est maintenu dans une position d'accouplement définie pour l'insertion du connecteur (40), **caractérisé en ce que** l'élément de verrouillage (30) est constitué d'une tôle ou d'un acier à ressort, **en ce qu'**il comporte au moins un élément à ressort (37) formé d'un seul tenant avec ledit élément de verrouillage, lequel élément à ressort permet d'amener automatiquement l'élément de verrouillage (30) dans une position de verrouillage, lorsque le connecteur (40) est inséré dans le raccord (10) à l'aide du connecteur (40), et de maintenir ledit élément de verrouillage dans la position de verrouillage, **en ce que** l'élément d'actionnement (341) et le premier élément d'encliquetage (34) sont formés d'un seul tenant avec l'élément de verrouillage (30) en termes, et **en ce que** l'élément de verrouillage (30) présente au moins une saillie élastique à ressort (35) formée d'un seul tenant avec celui-ci, laquelle saillie élastique à ressort permet de comprimer l'élément de verrouillage (30) dans une position axiale définie par rapport au raccord (10).

2. Système de verrouillage selon la revendication 1, **caractérisé en ce que** l'élément de verrouillage (30) comporte une branche (32) pouvant être déplacée perpendiculairement à un axe (16) du raccord (10) et dans laquelle un alésage (33) est réalisé pour le passage du connecteur (40).

3. Système de verrouillage selon la revendication 1 ou 2, **caractérisé en ce que** le premier élément d'encliquetage (34) réalisé au niveau de l'élément de verrouillage (30) vient en prise au moins par phase avec un second élément de verrouillage (22) au niveau du raccord (10).

4. Système de verrouillage selon l'une des revendications précédentes, **caractérisé en ce que** l'au moins une saillie (35) induit le centrage de l'élément de verrouillage (30) dans le raccord (10).

5. Système de verrouillage selon l'une des revendications précédentes, **caractérisé en ce que** l'élément de verrouillage (30) est logé et guidé dans une ouverture verticale (20) du raccord (10).

6. Système de verrouillage selon l'une des revendications précédentes, **caractérisé en ce que** l'élément de verrouillage (30) comporte au moins un élément à ressort (38, 39), au moyen duquel le connecteur (40) est sollicité élastiquement dans la direction axiale opposée à la direction d'insertion du connecteur (40) par rapport au raccord (10).

7. Système de verrouillage selon l'une des revendications précédentes 3 à 6, **caractérisé en ce qu'**au moins une surface inclinée (21) est réalisée au niveau d'une ouverture verticale (20) du raccord (10), laquelle surface inclinée permet de guider le premier élément d'encliquetage (34) en prise avec le second élément de verrouillage (22) au niveau du raccord (10) lorsque le verrou est relâché.
